# FASCICULE DE BREVET EUROPEEN

(11) **EP 0 836 309 B1**
(45) Date de publication et mention de la délivrance du brevet: **14.01.2004**
(21) Numéro de dépôt: 97402356.6
(22) Date de dépôt: 07.10.1997
(51) Int. Cl.: H04M 1/02, H04M 1/03

(54) **Montage d'un composant électrique dans un appareil**
Halterung eines elektrischen Bauteils in einem Gerät
Mounting of an electric component in an apparatus

(30) Priorité: 11.10.1996 FR 9612446
(43) Date de publication de la demande: 15.04.1998
(73) Titulaire: NORTEL NETWORKS France, 78117 Châteaufort (FR)
(72) Inventeur: Morvan, Pierre, 29460 Daoulas (FR); Esvan, Robert, 29100 Quimper (FR); Girard, Jacques, 29170 Pleuven (FR)
(74) Mandataire: Loisel, Bertrand

(56) Documents cités:
- EP-A- 0 490 214
- EP-A- 0 735 698
- US-A- 5 201 069
- ANZELONE: "DISCHARGE PATH FOR CASSETTE MODULE" IBM TECHNICAL DISCLOSURE BULLETIN, vol. 23, no. 3, août 1980, NEW YORK, pages 877-878, XP002035156

## Description

La présente invention concerne un appareil électrique comprenant une carte électronique maintenue en place par un élément de structure de l'appareil, et au moins un composant électrique connecté à la carte électronique, reçu dans un logement présent dans l'élément de structure et immobilisé dans ledit logement par au moins un organe d'appui élastique.

Dans la suite de l'exposé, on considérera, à titre d'illustration, le cas où l'appareil électrique en question est le combiné d'un poste téléphonique sans cordon, et où le composant électrique est constitué par une capsule d'écoute proche, c'est-à-dire par un haut-parleur de faible puissance. La fonction d' "écoute proche" se rencontre fréquemment dans les téléphones sans cordon. Lorsqu'elle est activée, la capsule/haut-parleur émet les sons correspondant au signal reçu avec une puissance plus importante que l'écouteur du combiné, mais pas trop forte pour ne pas trop pénaliser l'autonomie électrique du combiné, afin de permettre à plusieurs personnes d'entendre ce que dit le locuteur distant.

On comprendra toutefois que l'invention est applicable à divers types de composants (par exemple, l'écouteur ou le microphone du combiné), et de façon générale à des appareils électriques très divers.

L'invention vise principalement à simplifier le montage mécanique et la connexion électrique du composant dans l'appareil, en vue d'en réduire le prix de revient unitaire.

Une solution classique consiste à immobiliser le composant dans son logement au moyen d'un organe d'appui élastique tel qu'une épingle-ressort, et à effectuer le raccordement électrique au moyen de fils soudés et/ou branchés avec des connecteurs. Cette solution a pour inconvénient de requérir des pièces multiples à installer séparément. En outre, les soudures et les connecteurs sont souvent fragiles, ce qui peut notamment poser des problèmes lorsqu'il est nécessaire de démonter la carte ou le composant.

D'autre part, lorsque l'élément de structure recevant le composant est une coque du boîtier de l'appareil, qui vient fermer ce boîtier lorsque tous les éléments qu'il renferme ont été mis en place, la soudure ou le branchement des fils de connexion est souvent une opération délicate à moins que les fils soient longs, ce qui pose d'autres problèmes. Le document US-A-5 201 069 propose une solution alternative à la présente invention pour résoudre les problèmes ci-dessus.

L'invention a pour but de limiter l'incidence des problèmes ci-dessus en simplifiant le montage mécanique et la connexion électrique du composant dans l'appareil.

Selon l'invention, l'organe d'appui élastique consiste en un fil métallique, et présente une première portion où le fil métallique est enroulé pour former un ressort hélicoïdal travaillant en compression, et une seconde portion où le fil métallique s'étend transversalement à la première portion pour former un ressort travaillant en flexion. La première portion de l'organe d'appui élastique est placée dans un conduit présent dans l'élément de structure auprès dudit logement. Ce conduit s'étend sensiblement perpendiculairement à la carte électronique entre un fond et une extrémité ouverte en face d'une borne métallique de la carte électronique, de façon que ladite borne vienne en contact électrique et appuie sur l'extrémité de la première portion opposée à la seconde portion en sollicitant le ressort hélicoïdal tandis que l'extrémité de la première portion adjacente à la seconde portion bute sur le fond du conduit. Le conduit présente une entaille longitudinale pour laisser passer la seconde portion de l'organe d'appui élastique lors de l'introduction de la première portion par l'extrémité ouverte du conduit. L'élément de structure présente en outre, à l'opposé du conduit par rapport au logement, un moyen d'accrochage d'une extrémité de la seconde portion de l'organe d'appui élastique. Cette seconde portion s'appuie sur un plot de connexion du composant électrique qui la fait fléchir entre son extrémité accrochée et son autre extrémité située au fond du conduit.

L'organe d'appui élastique est alors une pièce simple et bon marché qui réalise à la fois les fonctions d'immobilisation du composant et de connexion électrique. En général, on prévoira autant de tels organes d'appui élastique qu'il y a de plots à raccorder à la carte sur le composant électrique.

De préférence, le conduit, le logement et le moyen d'accrochage sont constitués par des formes venues de moulage sur l'élément de structure de l'appareil, de sorte qu'ils n'ont pratiquement aucune incidence sur le prix de revient de l'ensemble.

Avantageusement, le plot de connexion du composant électrique est décalé, le long de la direction de la seconde portion de l'organe d'appui élastique, par rapport au point milieu entre le moyen d'accrochage et le fond du conduit. Cette disposition assure une force d'appui relativement importante sur le plot de connexion, pour garantir un bon contact électrique et immobiliser fermement le composant dans son logement.

Dans un mode de réalisation de l'invention, un bord de l'entaille du conduit présente un cran qui, lorsque le ressort hélicoïdal n'est pas sollicité, retient la première portion de l'organe d'appui élastique dans le conduit et maintient une flexion de la seconde portion dans un plan parallèle à l'axe du conduit. Ceci permet de tenir le composant dans son logement même lorsque l'élément de structure n'est pas mis en place en face de la carte. Lors de la fabrication de l'appareil, on peut ainsi assembler le composant sur l'élément de structure, avant de venir placer l'ensemble sur le reste de l'appareil. En outre, s'il est nécessaire d'ouvrir ultérieurement l'appareil, le composant électrique reste fixé à l'élément de structure lors du démontage de ce dernier sans qu'on risque d'endommager sa connexion électrique sur la carte. Le composant peut lui-même être démonté, par exemple s'il a besoin d'être remplacé, en dégageant l'organe d'appui élastique du cran.

Pour faciliter l'installation de l'organe d'appui élastique dans l'appareil, le bord de l'entaille du conduit comporte de préférence une rampe entre l'extrémité ouverte du conduit et le cran, cette rampe faisant fléchir la seconde portion dans un plan perpendiculaire à l'axe du conduit lorsque la première portion est enfoncée dans le conduit après accrochage de l'extrémité de la seconde portion, cette flexion dans un plan perpendiculaire étant relâchée une fois que la seconde portion a dépassé le cran.

D'autres particularités et avantages de la présente invention apparaîtront dans la description ci-après d'un exemple de réalisation non limitatif, en référence aux dessins annexés, dans lesquels :
- la Figure 1 est une vue latérale schématique d'un combiné téléphonique mettant en oeuvre la présente invention;
- la Figure 2 est une vue en perspective montrant les moyens de montage d'une capsule d'écoute amplifiée dans la coque supérieure du combiné ;
- la Figure 3 est une vue en perspective d'un organe d'appui élastique ; et
- la Figure 4 est un schéma en perspective d'un conduit dans lequel se loge cet organe.

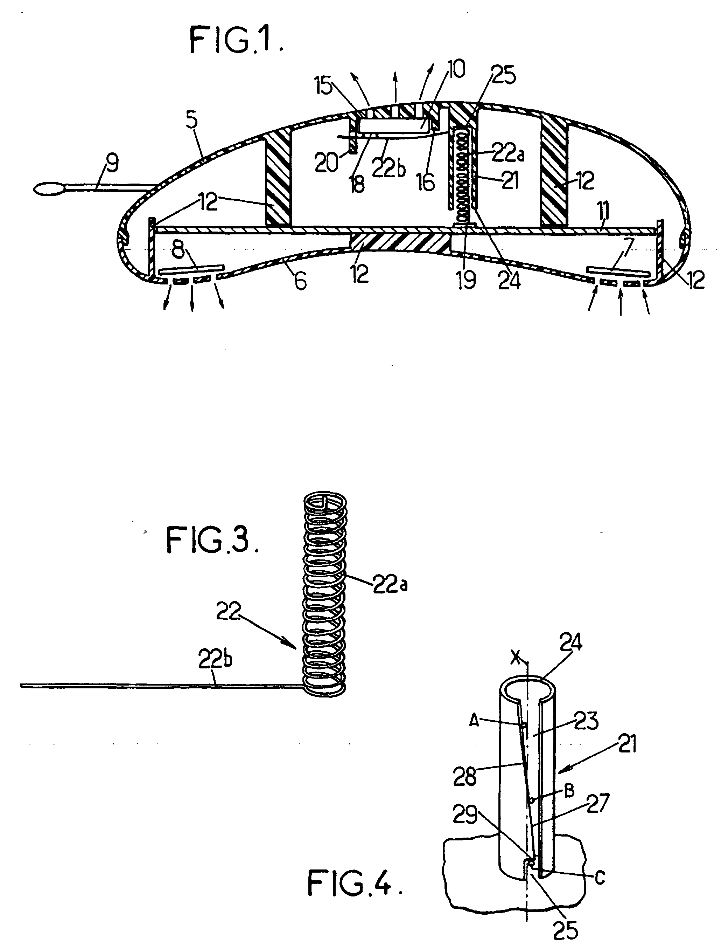

La Figure 1 montre schématiquement l'incorporation de l'invention dans un combiné téléphonique comportant de façon classique un boîtier composé d'une coque supérieure 5 et d'une coque inférieure 6 en matière plastique moulée, un microphone 7, un écouteur 8, une antenne radio 9, une capsule d'écoute amplifiée 10, un clavier non représenté et une carte électronique 11. La carte 11 consiste en un circuit imprimé comportant un certain nombre de composants nécessaires au fonctionnement de l'appareil. Cette carte 11 se place entre les deux coques de l'appareil, et est maintenue en position par des bossages ou nervures 12 prévus sur les faces internes des deux coques.

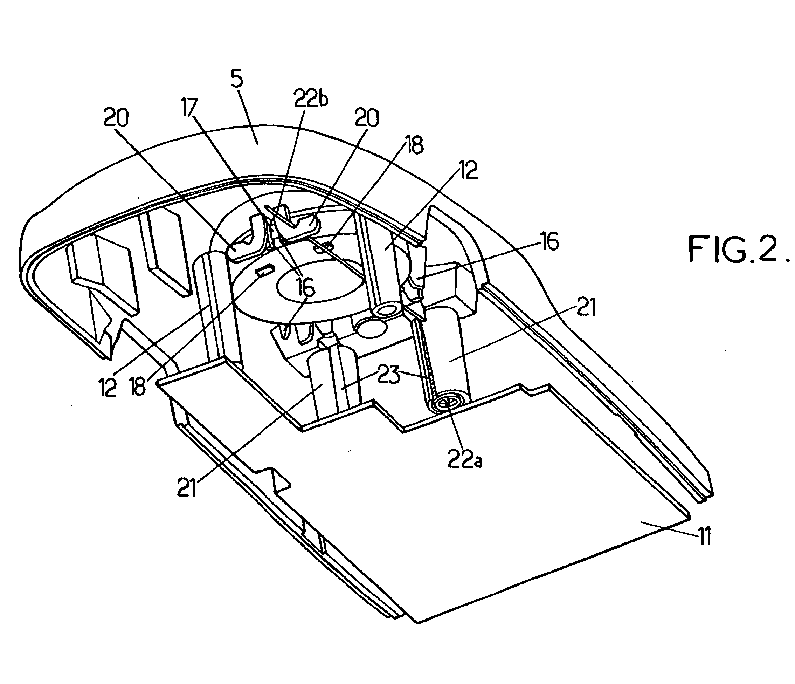

La face interne de la coque 5 présente un logement 15 délimité par des reliefs 16 venus de moulage avec la coque. Le logement 15 a une forme complémentaire de la capsule 10 qui, dans l'exemple considéré, a une forme générale de cylindre aplati. La périphérie de ce cylindre aplati comporte une excroissance radiale 17 qui se loge entre deux des reliefs 16 délimitant le logement 15 pour définir la position en rotation de la capsule 10 dans son logement (Figure 2).

La capsule 10 comporte deux plots métalliques 18 faisant saillie sur sa face orientée à l'opposé de la coque 5. Chacun de ces plots 18 est à raccorder à une borne métallisée respective 19 présente sur la carte 11 (Figure 1).

Chacun de ces plots 18 est associé à un crochet 20, à un conduit cylindrique 21 perpendiculaire au plan de la carte 11, et à un organe d'appui élastique 22. Le crochet 20 et le conduit 21 sont des formes prévues sur la face interne de la coque 5 et venues de moulage avec la matière plastique de celle-ci.

L'organe élastique 22, représenté séparément sur la figure 3, consiste en un fil métallique unique mis en forme de manière à avoir :
- une portion compressible 22a où le fil métallique est enroulé sur lui-même pour former un ressort hélicoïdal travaillant en compression ; et
- une portion flexible 22b où le fil métallique, sensiblement rectiligne, s'étend perpendiculairement à la direction de la portion compressible 22a.

Le conduit 21 a une extrémité 24 ouverte vers la carte 11, et sa paroi cylindrique présente une entaille longitudinale 23.

La portion hélicoïdale compressible 22a de l'organe élastique se loge dans le conduit cylindrique 21 dont l'entaille longitudinale 23 est disposée de manière à laisser passer la portion flexible 22b lors de l'introduction de la portion compressible 22a par l'extrémité ouverte 24 du conduit 21.

Lorsque l'appareil est complètement assemblé, le ressort hélicoïdal de la portion 22a s'appuie d'une part sur l'une des bornes métalliques 19 de la carte 11, et d'autre part sur le fond 25 du conduit 21, et est ainsi sollicité en compression de manière à garantir un contact électrique fiable de l'organe 22 sur la borne 19. La portion hélicoïdale 22a contribue également à immobiliser la carte 11 dans le combiné et à l'empêcher de vibrer.

La portion hélicoïdale 22a pousse également l'extrémité adjacente de la portion flexible 22b vers le fond 25 du conduit 21. L'extrémité opposée de la portion flexible 22b est quant à elle retenue par le crochet associé 20 qui l'empêche de se déplacer en direction de la carte 11.

Le conduit 21 et le crochet 20 sont situés de part et d'autre du logement 15. Le plot de connexion 18 de la capsule 10 fait saillie de manière à faire fléchir la portion 22b de l'organe élastique entre le crochet 20 et le fond du conduit 21. La portion flexible 22b maintient ainsi en place la capsule 10 et assure le contact électrique avec le plot 18. La force de contact est renforcée par un effet de levier du fait que le plot 18 est en une position excentrée proche du crochet 20, ainsi que le montrent les Figures 1 et 2.

L'entaille longitudinale 23 prévue sur la paroi du conduit cylindrique 21 est représentée de façon plus détaillée sur la Figure 4. L'un des bords 27 de cette entaille comporte une rampe inclinée 28 s'étendant entre l'extrémité ouverte 24 du conduit et un cran 29 voisin du fond 25 du conduit. La rampe 28 est positionnée de façon que:
- après avoir accroché l'extrémité de la portion 22b de l'organe dans le crochet 20, on peut commencer à introduire la portion hélicoïdale 22a dans le conduit 21 par son extrémité ouverte 24 sans solliciter élastiquement la portion flexible 22b, l'extrémité adjacente de la portion 22b ayant alors la position A représentée sur la Figure 4 ;
- lorsque l'extrémité adjacente de la portion 22b vient buter contre la rampe 28, on peut continuer à enfoncer la portion hélicoïdale 22a ce qui fait dévier la portion flexible 22b comme l'indique la position B sur la Figure 4, la portion 22b fléchissant alors dans un plan perpendiculaire à l'axe X du conduit 21 ;
- en poursuivant cet enfoncement, dès que la portion 22b dépasse le cran 29, ce fléchissement dans un plan perpendiculaire à l'axe X se relâche, et la portion 22b vient se placer derrière le cran 29 comme l'indique la position C sur la Figure 4.

Dans cette position C, le cran 29 retient la portion hélicoïdale 22a dans le conduit 21, et maintient une flexion de la portion 22b dans un plan parallèle à l'axe X. Cette flexion suffit à maintenir la capsule en place lorsqu'on manipule la coque supérieure 5 pourvue de la capsule 10 avant de l'assembler sur la coque inférieure 6 où après avoir séparé les deux coques.

Si on souhaite démonter la capsule 10, il suffit, après avoir séparé les deux coques, d'utiliser un outil pointu pour écarter la portion flexible 22b du cran 29 et de laisser son effort de flexion la faire remonter le long de l'entaille 23.

## Revendications

1. Appareil électrique comprenant une carte électronique (11) maintenue en place par un élément de structure (5) de l'appareil, et au moins un composant électrique (10) connecté à la carte électronique, reçu dans un logement (15) présent dans l'élément de structure et immobilisé dans ledit logement par au moins un organe d'appui élastique (22), l'organe d'appui élastique consistant en un fil métallique, et présentant une première portion (22a) où le fil métallique est enroulé pour former un ressort hélicoïdal travaillant en compression, et une seconde portion (22b) où le fil métallique s'étend transversalement à la première portion pour former un ressort travaillant en flexion, la première portion (22a) de l'organe d'appui élastique étant placée dans un conduit (21) présent dans l'élément de structure (5) auprès dudit logement (15), le conduit s'étendant sensiblement perpendiculairement à la carte électronique (11) entre un fond (25) et une extrémité ouverte en face d'une borne métallique (19) de la carte électronique de façon que ladite borne vienne en contact électrique et appuie sur l'extrémité de la première portion opposée à la seconde portion en sollicitant le ressort hélicoïdal tandis que l'extrémité de la première portion adjacente à la seconde portion bute sur le fond du conduit, le conduit (21) présentant une entaille longitudinale (23) pour laisser passer la seconde portion (22b) de l'organe d'appui élastique lors de l'introduction de la première portion (22a) par l'extrémité ouverte du conduit, l'élément de structure (5) présentant en outre, à l'opposé du conduit (21) par rapport au logement (15), un moyen (20) d'accrochage d'une extrémité de la seconde portion de l'organe d'appui élastique, et la seconde portion (22b) s'appuyant sur un plot de connexion (18) du composant électrique (10) qui fait fléchir la seconde portion entre son extrémité accrochée et son autre extrémité située au fond du conduit (21).

2. Appareil selon la revendication 1, **caractérisé en ce que** le plot de connexion (18) du composant électrique (10) est décalé, le long de la direction de la seconde portion (22b) de l'organe d'appui élastique, par rapport au point milieu entre le moyen d'accrochage (20) et le fond (25) du conduit (21).

3. Appareil selon la revendication 1 ou 2, **caractérisé en ce que** l'élément de structure (5) comporte un cran (29) coopérant avec la seconde portion (22b) de l'organe d'appui élastique au voisinage de son extrémité adjacente à la première portion (22a), de façon que, lorsque le ressort hélicoïdal n'est pas sollicité, ledit cran retienne la première portion (22a) de l'organe d'appui élastique dans le conduit (21) et maintienne une flexion de la seconde portion (22b) dans un plan parallèle à l'axe (X) du conduit.

4. Appareil selon la revendication 3, **caractérisé en ce que** ledit cran (29) est situé sur un bord (27) de l'entaille (23) du conduit (21).

5. Appareil selon la revendication 4, **caractérisé en ce que** ledit bord (27) de l'entaille (23) comporte une rampe (28) entre l'extrémité ouverte (24) du conduit et le cran (29), la rampe faisant fléchir la seconde portion (22b) dans un plan perpendiculaire à l'axe (X) du conduit lorsque la première portion (22a) est enfoncée dans le conduit après accrochage de l'extrémité de la seconde portion, cette flexion dans un plan perpendiculaire étant relâchée une fois que l'extrémité de la seconde portion adjacente à la première portion a dépassé le cran.

6. Appareil selon l'une quelconque des revendications 1 à 5, **caractérisé en ce que** le conduit (21), le logement (15) et le moyen d'accrochage (20) sont constitués par des formes venues de moulage sur l'élément de structure (5).

## Patentansprüche

1. Elektrisches Gerät, umfassend eine elektronische Karte (11), die durch ein Strukturelement (5) des Geräts am Platz gehalten wird, und mindestens ein an die elektronische Karte angeschlossenes elektrisches Bauelement (10), das in einer in dem Strukturelement vorgesehenen Aufnahme (15) aufgenommen ist und in dieser Aufnahme durch mindestens ein elastisches Andrückorgan (22) blockiert ist, wobei das elastische Andrückorgan aus einem Metalldraht besteht und einen ersten Abschnitt (22a) aufweist, in dem der Metalldraht aufgerollt ist, um eine auf Druck arbeitende Schraubenfeder zu bilden, sowie einen zweiten Abschnitt (22b), in dem der Metalldraht sich quer zu dem ersten Abschnitt erstreckt, um eine auf Biegung arbeitende Feder zu bilden, wobei der erste Abschnitt (22a) des elastischen Andrückorgans in einem Kanal (21) angeordnet ist, der in dem Strukturelement (5) bei dieser Aufnahme (15) vorgesehen ist und der sich im wesentlichen senkrecht zu der elektronischen Karte (11) zwischen einem Boden (25) und einem offenen Ende gegenüber einem metallischen Anschluss (19) der elektronischen Karte erstreckt, so dass dieser Anschluss mit dem dem zweiten Abschnitt entgegengesetzten Ende des ersten Abschnitts in elektrischen Kontakt kommt und gegen dieses drückt, indem er die Schraubenfeder belastet, während das dem zweiten Abschnitt benachbarte Ende des ersten Abschnitts am Boden des Kanals in Anschlag ist, wobei der Kanal (21) einen Längseinschnitt (23) aufweist, um den zweiten Abschnitt (22b) des elastischen Andrückorgans bei der Einführung des ersten Abschnitts (22a) über das offene Ende des Kanals durchtreten zu lassen, wobei das Strukturelement (5) außerdem auf der bezüglich der Aufnahme (15) dem Kanal (21) entgegengesetzten Seite ein Mittel (20) zum Einhaken eines Endes des zweiten Abschnitts des elastischen Andrückorgans aufweist und der zweite Abschnitt (22b) sich auf einen Anschlussklotz (18) des elektrischen Bauelements (10) stützt, der den zweiten Abschnitt zwischen seinem eingehakten Ende und seinem am Boden des Kanals (21) gelegenen anderen Ende sich verbiegen lässt.

2. Gerät nach Anspruch 1, **dadurch gekennzeichnet, dass** der Anschlussklotz (18) des elektrischen Bauelements (10) längs der Richtung des zweiten Abschnitts (22b) des elastischen Andrückorgans bezüglich des Mittelpunkts zwischen diesem Einhakmittel (20) und dem Boden (25) des Kanals (21) versetzt ist.

3. Gerät nach Anspruch 1 oder 2, **dadurch gekennzeichnet, dass** das Strukturelement (5) eine Raste (29) aufweist, die mit dem zweiten Abschnitt (22b) des elastischen Andrückorgans in Nähe seines dem ersten Abschnitt (22a) benachbarten Endes so zusammenwirkt, dass, wenn die Schraubenfeder nicht belastet ist, diese Raste den ersten Abschnitt (22a) des elastischen Andrückorgans in dem Kanal (21) zurückhält und eine Verbiegung des zweiten Abschnitts (22b) in einer zur Achse (X) des Kanals parallelen Ebene aufrechterhält.

4. Gerät nach Anspruch 3, **dadurch gekennzeichnet, dass** die Raste (29) an einem Rand (27) des Einschnitts (23) des Kanals (21) gelegen ist.

5. Gerät nach Anspruch 4, **dadurch gekennzeichnet, dass** dieser Rand (27) des Einschnitts (23) zwischen dem offenen Ende (24) des Kanals und der Raste (29) eine Schräge (28) aufweist, die den zweiten Abschnitt (22b) sich in einer zur Achse (X) des Kanals senkrechten Ebene verbiegen lässt, wenn der erste Abschnitt (22a) nach Einhaken des Endes des zweiten Abschnitts in den Kanal eingeführt wird, wobei diese Verbiegung in einer senkrechten Ebene nachlässt, sobald das dem ersten Abschnitt benachbarte Ende des zweiten Abschnitts die Raste überschritten hat.

6. Gerät nach einem der Ansprüche 1 bis 5, **dadurch gekennzeichnet, dass** der Kanal (21), die Aufnahme (15) und das Einhakmittel (20) von Formen gebildet sind, die an dem Strukturelement (5) mitgeformt sind.

## Claims

1. Electrical apparatus comprising an electronic board (11) held in place by a structural element (5) of the apparatus, and at least one electrical component (10) connected to the electronic board, received in a housing (15) present in the structural element and immobilised in the said housing by at least one elastic bearing organ (22), the elastic bearing organ consisting of a wire and having a first portion (22a) in which the wire is wound to form a helical spring working in compression, and a second portion (22b) in which the wire extends transversally to the first portion to form a spring working in flexion, the first portion (22a) of the elastic bearing organ being placed in a conduit (21) present in the structural element (5) close to the said housing (15), the conduit extending substantially perpendicularly to the electronic board (11) between a back end (25) and an open end facing a metal terminal (19) of the electronic board so that the said terminal comes into electrical contact and bears on the end of the first portion opposite to the second portion, biasing the helical spring while the end of the first portion adjacent to the second portion abuts against the back end of the conduit, the conduit (21) having a longitudinal slot (23) to allow passage of the second portion (22b) of the elastic bearing organ on introduction of the first portion (22a) through the open end of the conduit, the structural element (5) also having, opposite the conduit (21) relative to the housing (15), a means (20) for catching an end of the second portion of the elastic bearing organ, and the second portion (22b) bearing on a connection stud (18) of the electrical component (10) which causes the second portion to flex between its caught end and its other end situated at the back end of the conduit (21).

2. Apparatus as described in claim 1, **characterised by** the fact that the connection stud (18) of the electrical component (10) is offset, along the direction of the second portion (22b) of the elastic bearing organ, relative to the mid point between the catching means (20) and the back end (25) of the conduit (21).

3. Apparatus as described in claim 1 or 2,
**characterised by** the fact that the structural element (5) includes a notch (29) cooperating with the second portion (22b) of the elastic bearing organ in the vicinity of its end adjacent to the first portion (22a), so that, when the helical spring is not biased, the said notch retains the first portion (22a) of the elastic bearing organ in the conduit (21) and maintains flexion of the second portion (22b) in a plane parallel with the axis (X) of the conduit.

4. Apparatus as described in claim 3, **characterised by** the fact that the said notch (29) is situated on an edge (27) of the slot (23) in the conduit (21).

5. Apparatus as described in claim 4, **characterised by** the fact that the said edge (27) of the slot (23) includes an incline (28) between the open end (24) of the conduit and the notch (29), the incline causing the second portion (22b) to flex in a plane perpendicular to the axis (X) of the conduit when the first portion (22a) is inserted in the conduit after catching of the end of the second portion, this flexing in a perpendicular plane being relaxed once the end of the second portion adjacent to the first portion has gone beyond the notch.

6. Apparatus as described in any one of claims 1 to 5, **characterised by** the fact that the conduit (21), the housing (15) and the catching means (20) are formed by shapes moulded in the structural element (5).
